# EUROPÄISCHE PATENTANMELDUNG

(11) **EP 3 520 929 A1**
(43) Veröffentlichungstag der Anmeldung: **07.08.2019**
(21) Anmeldenummer: 18155290.2
(22) Anmeldetag: 06.02.2018
(51) Int. Cl.: B22F 3/105, B23K 15/00, B33Y 10/00, B33Y 50/02, B23K 26/342, B29C 64/153, B29C 64/393

(54) **VERFAHREN ZUM SELEKTIVEN BESTRAHLEN EINER MATERIALSCHICHT, HERSTELLUNGSVERFAHREN UND COMPUTERPROGRAMMPRODUKT**

(71) Anmelder: Siemens Aktiengesellschaft, 80333 München (DE)
(72) Erfinder: Geisen, Ole, 10781 Berlin (DE)

(57) **Zusammenfassung**

Es wird ein Verfahren zum selektiven Bestrahlen einer Materialschicht (S) in der additiven Herstellung angegeben, das Verfahren umfassend das Bereitstellen einer vorbestimmten Bauteilgeometrie (B), welche Geometrieinformationen einzelner Schichten (S) eines additiv herzustellenden Bauteils (B) enthält, und das schichtweise Festlegen eines Bestrahlungsmusters (BM) in Flächenbereichen (1FB, 2FB) einer aufzubauenden Schicht (S) für die Herstellung des Bauteils (B), wobei das Bestrahlungsmuster (BM) in jedem Flächenbereich (FB) Bestrahlungsvektoren (V) umfasst, und - wenn eine vordefinierte Bestrahlungsvektorlänge (Lₘ) in einem ersten Flächenbereich (1FB) unterschritten wird - Verlängern von Bestrahlungsvektoren in einem zu dem ersten Flächenbereich (1FB) benachbarten zweiten Flächenbereich (2FB) der Schicht (S) bis zu einer Bauteilkontur (10).

## Beschreibung

Die vorliegende Erfindung betrifft ein Verfahren zum selektiven Bestrahlen einer Materialschicht in der additiven Herstellung, ein entsprechendes additives Herstellungsverfahren, ein mit diesem Herstellungsverfahren hergestelltes Bauteil und ein entsprechendes Computerprogrammprodukt.

Das Verfahren zum selektiven Bestrahlen kann ein CAM-Verfahren (Computer-Aided-Manufacturing) Verfahren darstellen oder umfassen.

Das Bauteil bezeichnet vorzugsweise ein für den Einsatz in einer Strömungsmaschine, vorzugsweise im Heißgaspfad einer Gasturbine, vorgesehenes Bauteil. Demgemäß besteht das Bauteil vorzugsweise aus einer nickel- oder kobaltbasierten Superlegierung, oder umfasst diese. Die Legierung kann weiterhin ausscheidungs- oder dispersionsgehärtet sein.

Für die beschriebenen Bauteile geeignete generative oder additive Herstellungsverfahren umfassen beispielsweise als Pulverbettverfahren das selektive Laserschmelzen (SLM) oder Lasersintern (SLS), oder das Elektronenstrahlschmelzen (EBM).

Ein Verfahren zum selektiven Laserschmelzen ist beispielsweise bekannt aus EP 2 601 006 B1.

Additive Fertigungsverfahren (englisch: "additive manufacturing") haben sich insbesondere als besonders vorteilhaft für komplexe oder kompliziert oder filigran designte Bauteile, beispielsweise labyrinthartige Strukturen, Kühlstrukturen und/oder Leichtbau-Strukturen erwiesen.

Insbesondere ist die additive Fertigung durch eine besonders kurze Kette von Bearbeitungsschritten vorteilhaft, da ein Herstellungs- oder Fertigungsschritt eines Bauteils auf Basis einer entsprechenden CAD-Datei erfolgen kann.

Üblicherweise wird, beispielsweise über eine derartige CAD-Datei, eine Bauteilgeometrie definiert oder bereitgestellt, und diese im Rahmen von rechnergestützten Fertigungsverfahren in einzelne Schichten unterteilt ("slicing"). Für die selektive Verfestigung dieser Schichten, welche für die finale (physische) Herstellung des Bauteils beispielsweise aus einem pulverförmigen Basismaterial bestehen können, nachfolgend ein Bestrahlungsmuster mit einzelnen Bestrahlungsvektoren für jede zu verfestigende Bauteilschicht festgelegt. Dies erfolgt vorzugsweise ebenfalls rechnergestützt, beispielsweise mittels eines CAM-Verfahrens.

Die Schichtdicken, in welche das Konstruktionsmodell des Bauteils auf diese Weise unterteilt wird, können in der anschließenden Herstellung je nach gewünschter geometrischer Auflösung weniger als 100 µm, beispielsweise 40 µm bis 60 µm, betragen. Entsprechend hoch ist die Anzahl der Schichten und auch die Anzahl der festzulegenden Bestrahlungsmuster oder Bestrahlungstrajektorien. Zweckmäßigerweise wird ein Bestrahlungsmuster nur in den tatsächlich zu verfestigenden lateralen Bereichen oder Flächenbereichen einer zu verfestigenden Schicht festgelegt. Die Flächenbereiche können virtuelle oder modellierte Bereiche in der Schichtebene einer Bauteilschicht bezeichnen oder auch - sofern man auf den physischen Aufbau des Bauteils abstellt - Bereich in Aufsicht auf das Pulverbett betrachtet.

Die Bestrahlung kann beispielsweise mittels eines Elektronenstrahls oder eines Laserstrahls entsprechend der gewünschten Geometrie des Bauteils selektiv erfolgen, wobei in den zu verfestigenden Flächenbereichen das Pulver zunächst aufgeschmolzen und für die Herstellung der Struktur des Bauteils erstarrt oder verfestigt wird.

Für das die eigentliche physische additive Herstellung des Bauteils vorbereitende CAM-Verfahren werden die Bestrahlungspfade (Bestrahlungsmuster) vorzugsweise derart arrangiert, dass die Pulverschicht, beispielsweise flächendeckend, gerastert und umgeschmolzen werden kann. Dazu wird die zu verfestigende Schicht vorzugsweise in die genannten Flächenelemente oder Flächenbereiche unterteilt, beispielsweise Streifen oder schachbrettartige, Flächen oder Flächensegmente.

Das Bestrahlungsmuster wird vorzugsweise derart festgelegt, dass ein Energiestrahl (Elektronenstrahl oder Laser) nachträglich mäanderförmig über die Schicht geführt oder gerastert werden kann. Für eine derartige Bestrahlung werden also mäanderförmige Bestrahlungsvektoren, welche beispielsweise das Bestrahlungsmuster bilden, festgelegt.

Nachdem im Wege des pulverbett-basierten Prozesses eine Schicht mit dem Energiestrahl bestrahlt wurde, wird in der Regel das Bestrahlungsmuster relativ zu der Bauplatte verdreht, um Strukturdefekten im Bauteil vorzubeugen, welche beispielsweise durch direkt übereinander angeordnete Laserpfade, entstehen können, sowie, um ein homogeneres Gefüge im Bauteil zu generieren. Gleichzeitig bedeutet das, dass das Bestrahlungsmuster schichtweise angepasst wird oder werden muss, und die Längen der Bestrahlungsvektoren von Schicht zu Schicht stark variieren können. Ein Problem, welches durch diese Situation vermehrt auftritt, sind lokale Überhitzungen, welche durch zu kurze Bestrahlungsvektoren (Scanvektoren) hervorgerufen werden. Diese Überhitzungen treten vorzugsweise an Schichträndern oder Kanten auf, oder an anderen Bereichen der Schicht, in denen die Kontur der Schicht stark gekrümmt ist.

Der Grund weshalb die Überhitzungen gerade während der Herstellung durch zu kurz bemessene Bestrahlungsvektoren auftreten, ist, dass der Energiestrahl lokal in einem bestimmten Flächenbereich in kurzer Zeit häufig über gleiche oder benachbarte Flächenbereiche streicht, und die Wärme möglicherweise aus diesem Bereich nie ausreichend abgeführt wird. Mit anderen Worten kann die Strahlungsleistung oder Energiedichte (pro Zeiteinheit), welche während der Bestrahlung vom Energiestrahl in das Pulverbett eingebracht wird, bei einem Bestrahlungsmuster mit zu kurzen Bestrahlungsvektoren, zu groß sein.

Insbesondere für den Bau von Komponenten aus Hochleistungswerkstoffen, wie Superlegierungen, welche zu Heißrissen neigen, können die genannten Überhitzungen zu irreparablen Strukturdefekten führen. Weiterhin können diese zu hohen Temperatureinträge während des Prozesses zu Verformungen (Hochziehen) und Verspannungen von Randbereichen des Bauteils führen, was auch dazu führen kann, dass ein Beschichterwerkzeug, welches für den Schichtauftrag des Pulvers oder Basismaterials sorgt, während der Herstellung mit diesem Randbereich kollidiert.

Es ist daher eine Aufgabe der vorliegenden Erfindung, Mittel anzugeben, welche die genannten Überhitzungen im Prozess vermeiden und damit zu einer verbesserten Bauteilqualität, einer besseren Maßhaltigkeit, zu einem homogeneren Gefüge des Bauteils und überdies zu einer erhöhten Prozesssicherheit führen können.

Diese Aufgabe wird durch den Gegenstand der unabhängigen Patentansprüche gelöst. Vorteilhafte Ausgestaltungen sind Gegenstand der abhängigen Patentansprüche.

Ein Aspekt der vorliegenden Erfindung betrifft ein Verfahren zum selektiven Bestrahlen einer Materialschicht in der additiven Herstellung oder Fertigung eines Bauteils. Die Materialschicht kann aus einem pulverförmigen oder flüssigen Basismaterial bestehen.

Das Verfahren umfasst das Bereitstellen oder Einlesen einer vorbestimmten Bauteilgeometrie, beispielsweise einer Konstruktionsdatei (CAD) oder einem "3D-Scan" des Bauteils. Die Bauteilgeometrie enthält Geometrieinformationen einzelner Schichten des additiv herzustellenden Bauteils.

Das Verfahren umfasst weiterhin das schichtweise Festlegen eines Bestrahlungsmusters in Flächenbereichen (beispielsweise Streifen oder schachbrettartigen Bereichen) einer aufzubauenden Schicht für das Bauteil, wobei das Bestrahlungsmuster in jedem Flächenbereich Bestrahlungsvektoren umfasst und wobei - wenn eine (vor)definierte Bestrahlungsvektorlänge in einem ersten Flächenbereich, beispielsweise von einem gegebenen oder aktuellen Bestrahlungsvektor, unterschritten wird - Verlängern von Bestrahlungsvektoren in einem zu dem erste Flächenbereich benachbarten zweiten Flächenbereich der Schicht bis zu einer Bauteilkontur.

Die Bestrahlungsvektoren in dem genannten zweiten Flächenbereich werden vorzugsweise "auf Kosten" der Länge der Bestrahlungsvektoren in den ersten Flächenbereich hinein verlängert.

Vorzugsweise ist der Grund, weshalb die Länge des genannten Bestrahlungsvektors in dem ersten Flächenbereich unterhalb der vordefinierten Bestrahlungsvektorlänge liegt, dass dieser erste Flächenbereich einen Rand oder eine Kante der Bauteilschicht bezeichnet. Die Bauteilkontur kann demgemäß beispielsweise einen Rand der Geometrie des Bauteils oder einen Rand der Schicht bezeichnen.

Die vordefinierte Bestrahlungsvektorlänge kann eine minimale Bestrahlungsvektorlänge sein, nämlich eine unterhalb derer mit übermäßigen, destruktiven Überhitzungen der Schicht während des Prozesses zu rechnen ist.

Die Bestrahlungsvektoren des benachbarten zweiten Flächenbereichs werden mit anderen Worten vorzugsweise dann in den ursprünglichen ersten Flächenbereich hinein verlängert, wenn beispielsweise ein aktuell festzulegender Vektor (Ist-Vektor) den Wert der vordefinierten Bestrahlungsvektorlänge unterschreitet.

Das Verlängern der Bestrahlungsvektoren erfolgt im Rahmen der vorliegenden Erfindung auf Datenbasis rechnergestützt, sodass schließlich bei der Herstellung des Bauteils die Bestrahlungsvektoren nicht mehr zu kurz bemessen sind, und zu Überhitzungen führen.

Das Verfahren kann eine adaptive, rechnergestützte Maßnahme im Rahmen des CAM beschreiben, welche die Bestrahlungsvektoren derart festlegt, dass die Bestrahlungsvektoren beispielsweise empirisch oder anhand von geschätzten, berechneten und/oder simulierten Ergebnissen eine Mindestlänge haben, welche dann im eigentlichen Herstellungsprozess angewendet, die beschriebenen Probleme umgeht.

Durch die beschriebene Lösung können die wesentlichen Schwierigkeiten, welche die additive Fertigung hinsichtlich ihrer Industrialisierung und Reproduzierbarkeit derzeit hat, gelöst werden. Die durch die vorliegende Erfindung angegebenen Maßnahmen bedeuten deshalb eine maßgebliche Verbesserung, welche, insbesondere bereits bei der Vorbereitung eines Aufbauprozesses, zu signifikant verbesserten Material- und Struktureigenschaften des Bauteils führt.

In einer Ausgestaltung werden die Bestrahlungsvektoren in dem zweite Flächenbereich flächendeckend bis zu der Bauteilkontur verlängert, um eine simulierte, geschätzte und/oder berechnete lokale Überhitzung durch zu kurze Bestrahlungsvektoren in dem ersten Flächenbereich zu verhindern. Die genannte Schätzung oder Berechnung kann beispielsweise anhand einer Simulation, welche den Wärmeeintrag in das Pulverbett bzw. in das Bauteil und/oder Struktureigenschaften des Bauteils berücksichtigt, erfolgen.

In einer Ausgestaltung erfolgt das schichtweise Festlegen rechnerunterstützt mittels eines CAM-Verfahrens.

In einer Ausgestaltung wird das Bestrahlungsmuster für alle Schichten des additiv herzustellenden Bauteils festgelegt und gespeichert. Diese Ausgestaltung ermöglicht mit Vorteil bei der Entstehung von Strukturdefekten im Bauteil das nachträgliche Ziehen von Rückschlüssen zu der gewählten oder festgelegten Bestrahlungsstrategie (Bestrahlungsmuster). Diese Ausgestaltung kann weiterhin hilfreich sein, um einen "digitalen Zwilling" des Bauteils zu generieren oder zu entwickeln.

In einer Ausgestaltung werden die Informationen des Bestrahlungsmusters für das Bauteil schichtweise mit den Geometrieinformationen einzelner Schichten des Bauteils in einem gemeinsamen Datensatz bereitgestellt und/oder verknüpft. Bei dem gemeinsamen Datensatz kann es sich beispielsweise um ein xml-Format, ein amf-File (.amf), ein vergleichbares Format oder einen anderen CAM-Datensatz handeln, welcher zusätzlich zu den Geometrieinformationen (Konstruktionsinformationen) beispielsweise Informationen über die gewählten Bestrahlungsparameter, wie die Scan- oder Bestrahlungsgeschwindigkeit, Laserleistung, Spur-, Streifen- oder "Hatch"-Abstand" und/oder Streifenbreite, enthält. Mittels dieser Parameter lässt sich beispielsweise auch die ins Pulvermaterial und/oder die verfestigte Schicht eingebrachte Strahlungsleistung oder Strahlungsenergie pro Zeitintervall einstellen, berechnen und im Rahmen der beschriebenen Ausführungsform speichern.

Ein weiterer Aspekt der vorliegenden Erfindung betrifft ein additives Herstellungsverfahren, umfassend das beschriebene Verfahren zum selektiven Bestrahlen, wobei das selektive Bestrahlen mittels eines Lasers oder eines Elektronenstrahls erfolgt.

In einer Ausgestaltung ist die Materialschicht eine Pulverschicht.

In einer Ausgestaltung ist das Material der Pulverschicht aus einer, insbesondere gehärteten, nickel- oder kobaltbasierten Superlegierung.

In einer Ausgestaltung ist das Bauteil eine im Heißgaspfad einer Strömungsmaschine einzusetzende Komponente.

Ein weiterer Aspekt der vorliegenden Erfindung betrifft ein Bauteil, welches gemäß dem beschriebenen additiven Herstellungsverfahren hergestellt oder herstellbar ist, weiterhin umfassend eine - im Vergleich zu einem gemäß dem Stand der Technik hergestellten Bauteil - um beispielsweise 50 % bis 100 % verbesserte Maßhaltigkeit. Die Maßhaltigkeit oder Maßhaltigkeitstoleranz kann beispielsweise eine Differenz oder einen Abstand zwischen einem zulässigen Höchst- und einem zulässigen Mindestmaß (gemessen entlang einer beliebigen Ausdehnung) des Bauteils, bezeichnen; eine zu einer gegebenen Maßhaltigkeit verbesserte Toleranz in diesem Sinne beispielsweise eine Verkleinerung des Toleranzabstandes. Eine Verbesserung der Maßhaltigkeit oder Maßhaltigkeitstoleranz um 100 % soll vorliegend beispielsweise eine Halbierung des Toleranzabstands bedeuten.

Zusätzlich weist das Bauteil vorzugsweise eine im Vergleich zu einem bekannten Bauteil homogenere Struktur und/oder bezüglich Strukturfehlern, wie Heißrissen, verbesserte Materialstruktur, und dementsprechend verbesserte mechanische Eigenschaften auf.

Ein weiterer Aspekt der vorliegenden Erfindung betrifft ein Computerprogramm bzw. ein Computerprogrammprodukt, umfassend Befehle, die bei der Ausführung des Programms durch einen Computer oder eine Datenverarbeitungseinrichtung, diesen veranlassen, das schichtweise Festlegen des Bestrahlungsmusters durchzuführen.

Ausgestaltungen, Merkmale und/oder Vorteile, die sich vorliegend auf das Verfahren zum selektiven Bestrahlen und/oder das Computerprogrammprodukt beziehen, können ferner das additive Herstellungsverfahren und/oder das Bauteil betreffen und umgekehrt.

Weitere Einzelheiten der Erfindung werden nachfolgend anhand der Figuren beschrieben.
- Figur 1: zeigt eine schematische Aufsicht auf eine Materialschicht eines additiv aufzubauenden Bauteils sowie eine Unterteilung der Materialschicht in streifenartige Flächenbereiche.
- Figur 2: zeigt einen detaillierten Ausschnitt der Figur 1 und ein beispielhaftes Bestrahlungsmuster.
- Figur 3: zeigt eine zur Figur 1 oder Figur 2 ähnliche Darstellung mit weiteren gekennzeichneten Informationen.
- Figur 4: deutet anhand einer zu den vorherigen Figuren ähnlichen Darstellung eine erfindungsgemäße Lösung des vorliegend beschriebenen Problems an.
- Figur 5: deutet anhand eines schematischen Flussdiagramms erfindungsgemäße Verfahrensschritte an.
- Figur 6: deutet anhand einer schematischen Schnittansicht einen additiven Herstellungsprozess eines Bauteils an.

In den Ausführungsbeispielen und Figuren können gleiche oder gleichwirkende Elemente jeweils mit den gleichen Bezugszeichen versehen sein. Die dargestellten Elemente und deren Größenverhältnisse untereinander sind grundsätzlich nicht als maßstabsgerecht anzusehen, vielmehr können einzelne Elemente, zur besseren Darstellbarkeit und/oder zum besseren Verständnis übertrieben dick oder groß dimensioniert dargestellt sein.

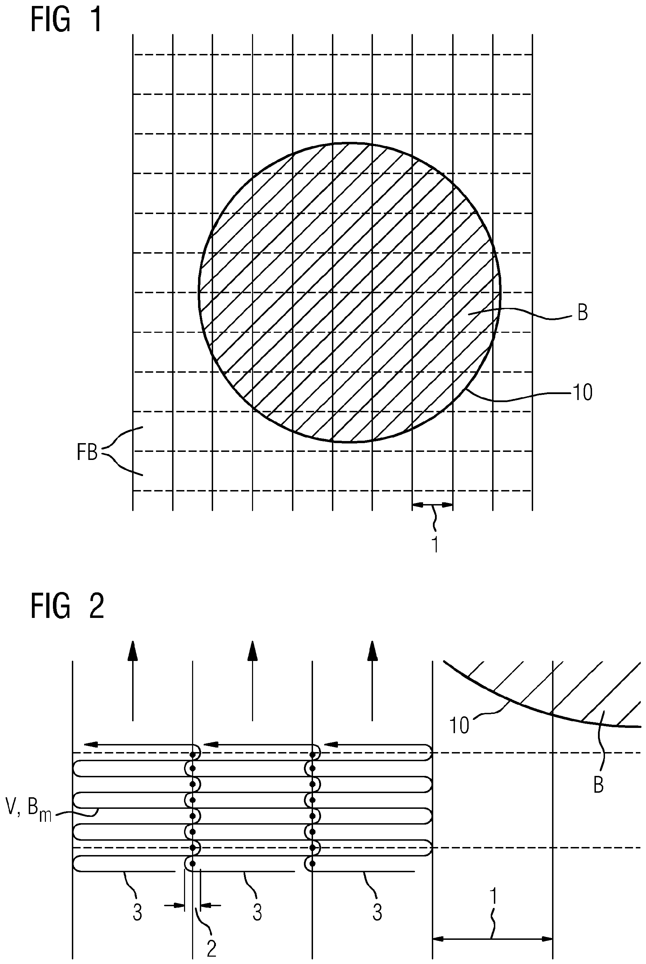

Figur 1 zeigt ein Bauteil bzw. einen Teil davon in einer Aufsicht. Das Bauteil oder ein Konstruktionsmodell (CAD-Datei) des Bauteils ist mit dem Bezugszeichen B gekennzeichnet. Der rund dargestellte Teil des Bauteils B kann weiterhin eine Querschnittsansicht des Bauteils - beispielsweise während seiner additiven Herstellung bzw. einer modellierten Schicht desselben - bezeichnen.

Bei dem Bauteil handelt es sich vorzugsweise um ein Bauteil, welches im Heißgaspfad einer Strömungsmaschine, beispielsweise einer Gasturbine, eingesetzt wird. Insbesondere kann das Bauteil ein Lauf- oder Leitschaufel, ein Segment oder Ringsegment, ein Brennerteil oder eine Brennerspitze, eine Zarge, eine Schirmung, eine Düse, Dichtung, einen Filter, eine Mündung oder Lanze, einen Resonator, Stempel oder einen Wirbler bezeichnen, oder einen entsprechenden Übergang, Einsatz, oder ein entsprechendes Nachrüstteil.

Obwohl das Bauteil B in den beschriebenen Zeichnungen zumeist rund oder zylindrisch dargestellt ist, kann es jede beliebige vordefinierte Geometrie, insbesondere sogar eine besonders komplizierte oder filigrane Geometrie, aufweisen.

Um entsprechende Bauteile herzustellen, verwendet man unter den additiven Verfahren häufig das selektive Laserschmelzen oder das Elektronenstrahlschmelzen, wobei ein Energiestrahl ausgehend von einem festgelegten Bestrahlungsmuster selektiv über ein Pulverbett geführt wird, um so die gewünschte Struktur des Bauteils B gemäß der vorbestimmten Geometrie herzustellen.

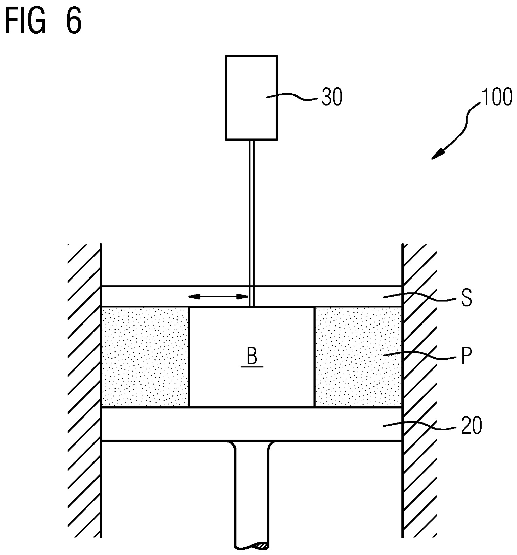

In Figur 6 ist dazu vorliegend beschrieben, dass das Bauteil B nach den vorbereitenden CAM-Prozessschritten schließlich durch selektives Bestrahlen aus einem Pulverbett P auf einer Bauplattform 20 aufgebaut wird. Das Bestrahlen erfolgt mittels eines durch eine Bestrahlungsvorrichtung 30 emittierten Lasers oder Elektronenstrahls vorzugsweise schichtweise (vgl. Schicht S in Figur 6).

Das Bauteil B weist eine Bauteilkontur 10 auf. Die Bauteilkontur 10 bezeichnet lediglich einen Rand des Bauteils. Anders als in den Figuren dargestellt, kann es sich jedoch bei diesem Rand oder dieser Kontur um eine innen liegende Kontur, beispielsweise auch die Kontur eines Hohlraumes, handeln.

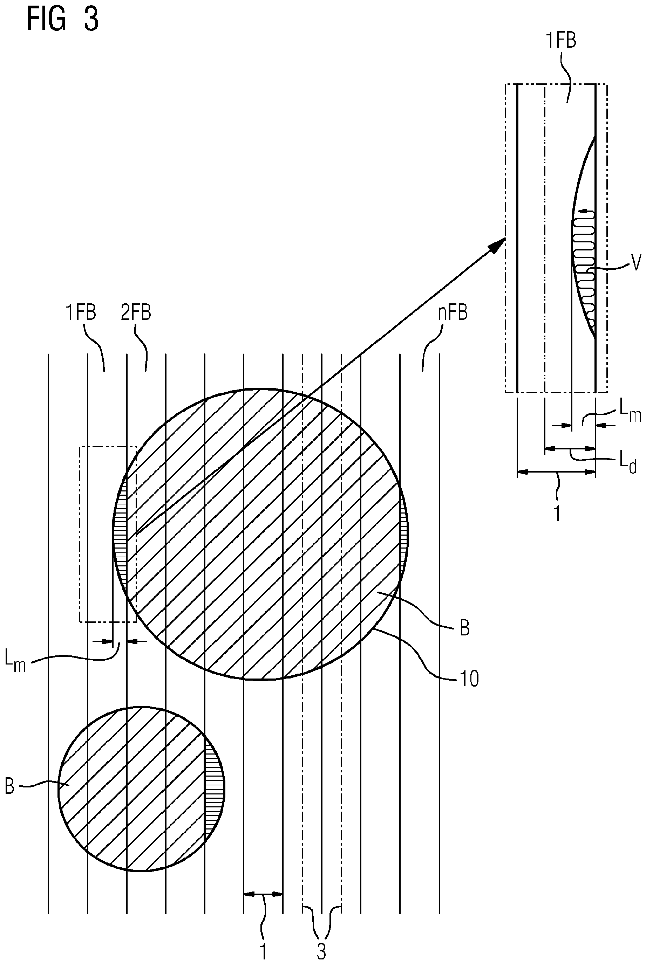

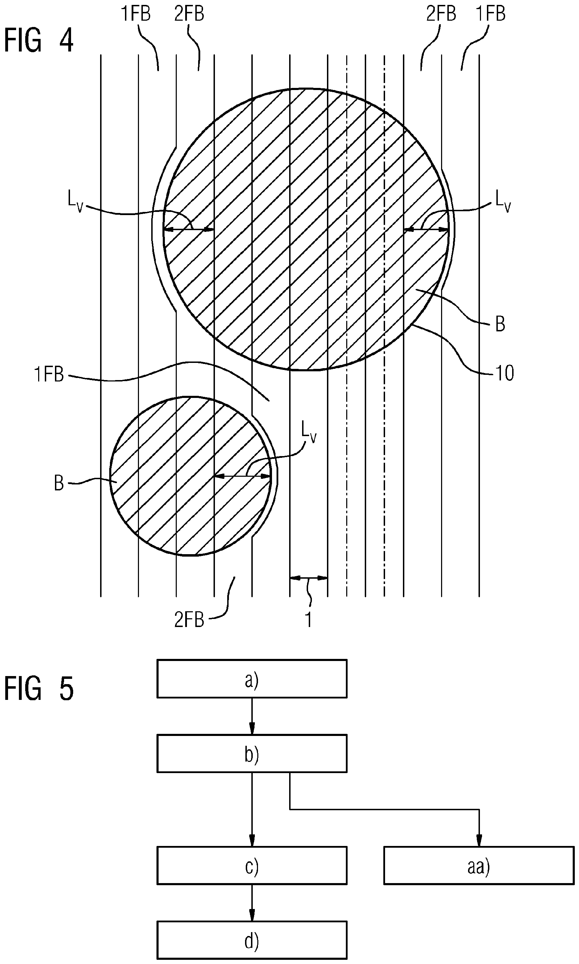

In der Darstellung der Figur 1 ist die Schicht des Bauteils B mit einem Streifenmuster (vertikale gerade Trennstriche der Streifen nicht explizit gekennzeichnet) überlagert, welches eine Streifenbreite 1 aufweist. Jeder Streifen des Streifenmusters bezeichnet vorzugsweise einen Flächenbereich (vergleiche Figuren 3 und 4), in welchem für die additive Herstellung des Bauteils ein Bestrahlungsmuster festgelegt werden kann (vergleiche Figur 2). Eine Streifenbreite ist vorliegend mit dem Bezugszeichen 1 gekennzeichnet.

Zusätzlich oder alternativ zu dem Streifenmuster, kann eine schachbrettartige Unterteilung von Flächenbereichen vorgesehen sein (vergleiche ebenfalls durchgezogene und gestrichelte Linien in Figuren 1 und 2).

Die genannte Unterteilung in Flächenabschnitte oder Flächenbereiche erfolgt beispielsweise rechnergestützt und auf Datenbasis mittels des CAM-Verfahrens.

Bei der streifenartigen Bestrahlung oder Belichtung wird vorzugsweise erst ein ganzer Streifen, beispielsweise von oben nach unten, gemäß dem zuvor festgelegten Bestrahlungsmuster bestrahlt, bevor zum nächsten Streifen gewechselt wird. Bei einem schachbrettartigen Bestrahlungsvorgang können hingegen beispielsweise einzelne Schachbrettflächen für die Bestrahlung zufällig nacheinander festgelegt werden.

Figur 2 zeigt eine vergrößerte Ansicht des unteren linken Bereichs der Figur 1. Oben rechts in der Figur 2 ist das Bauteil B gezeigt sowie die Bauteilkontur 10.

Beispielhaft sind - der besseren Übersichtlichkeit halber abseits von dem Bauteil B - Streifen mit Streifenabstand 1 eingezeichnet, welche vorliegend die Flächenbereiche FB darstellen, in denen das Bestrahlungsmuster BM definiert oder festgelegt wird (vgl. Figuren 3 und 4). Die gestrichelten Linien deuten an, dass die zu bestrahlenden Fläche, statt streifenartig, auch schachbrettartig mit einem Energiestrahl (vergleiche Figur 6) bestrahlt bzw. gerastert werden kann.

Die gerade eingezeichneten Pfeile in Figur 2 deuten eine übergeordnete Bestrahlungsrichtung an, gemäß derer der Energiestrahl weiterhin vorgegeben durch die Geometrie des Bauteils B über das Pulverbett geführt werden kann.

Ein Pulverbett ist in den Figuren 1 bis 4 der Einfachheit halber nicht dargestellt. Vorzugsweise kann jedoch der Bereich des Bauteils B denjenigen Bereich des Pulverbettes bezeichnen, welcher für die additive Herstellung des Bauteils bestrahlt wird.

Pro streifenartigem Flächenbereich (vergleiche Figur 3) wird ein Bestrahlungsmuster BM, vorzugsweise aus mäanderförmigen Bestrahlungsvektoren V zusammengesetzt. Mit anderen Worten kann die "Mäandergeometrie" der übergeordneten Bestrahlungsrichtung (vgl. gerade Pfeile in Figur 2) aufmoduliert werden.

Es ist weiterhin in Figur 2 zu erkennen, dass Bestrahlungsvektoren V benachbarter Streifen oder Flächenbereiche am Rande der Streifen in einem Streifenüberlapp oder Überlappbereich 2 überlappen, sodass das Pulverbett auch wirklich flächendeckend bestrahlt und damit entsprechend der Geometrie des Bauteils verfestigt werden kann, und nicht etwa Strukturbereiche im pulverförmigen oder porösen Zustand verbleiben. Die mit dem Bezugszeichen 3 gekennzeichneten Stellen bezeichnen dabei die Mittelpunktbahnen des Energiestrahls (vorliegend nicht explizit gekennzeichnet).

Durch den Überlapp der Streifen werden bei der Bestrahlung eines zweiten Streifens (vgl. mittlerer gerader Pfeil) diejenigen Bereiche, welche mit einem benachbarten, zuvor bestrahlten ersten Streifen (vgl. linker gerader Pfeil) überlappen, von dem Energiestrahl erneut umgeschmolzen. Dies kann sich ebenfalls positiv auf die resultierende Materialstruktur auswirken.

Figur 3 zeigt analog zu den Figuren 1 und 2 zwei Bauteilbereiche oder -schichten B, welche in der dargestellten Aufsicht auf die zu verfestigende Schicht nicht zusammenhängen. Beide Geometrieen sind lediglich beispielhaft mit runden Konturen 10 dargestellt.

Die Figuren 1 bis 3 können vorliegend vorzugsweise eine Situation des Standes der Technik beschreiben, in welchen die erfindungsgemäßen Lösungen noch nicht implementiert sind. Insbesondere ist im oberen Bereich der Figur 3 zu erkennen, dass die Bauteilschicht B am linken und am rechten Rand nur leicht über die Streifenbegrenzungen hinausragt. Diese Bereiche sind vorliegend mit dem Bezugszeichen 1FB als erste Flächenbereiche gekennzeichnet. In diesen Bereichen werden nun die Bestrahlungsvektoren V ebenfalls durch ein rechnergestütztes, den additiven Herstellungsprozess vorbereitendes Verfahren (CAM-Verfahren) zu dem entsprechenden Bestrahlungsmuster BM zusammengesetzt und festgelegt (vergleiche vergrößerter Abschnitt des ersten Flächenbereichs oben rechts in Figur 3).

Diese ersten Flächenbereiche 1FB sind vorliegend zu zweiten Flächenbereichen 2FB des Bauteils B benachbart angeordnet.

Mit Bestrahlungsvektoren V ist vorzugsweise vorliegend jeder Abschnitt des Bestrahlungsmusters BM gemeint, welcher sich direkt senkrecht zu den Streifen, also entlang des direkten Streifenabstands 1 erstreckt.

Jeder einzelne Bestrahlungsvektor V überhaupt und auch des ersten Flächenbereichs 1FB wird zweckmäßigerweise nur innerhalb der Bauteilkontur 10 festgelegt. Jeder Bestrahlungsvektor V des ersten Flächenbereichs 1FB weist weiterhin lediglich Vektoren V mit einer Bestrahlungsvektorlänge von maximal Lₘ auf, welche kleiner ist als der Streifenabstand 1. Vergleiche hierzu ebenfalls den vergrößerten Abschnitt oben rechts in der Figur 3, in welchem ein mäanderförmiges Bestrahlungsmuster mit Vektoren V zu sehen ist.

Folglich ist, wie oben beschrieben, ein Wärmeeintrag während der Bestrahlung in diesen Bereichen höher, da ein Laser oder Elektronenstrahl in einer gegebenen Zeit öfter diesen lokal begrenzten Abschnitt abfährt und so das Schmelzbad bzw. eine wärmebeeinflusste Zone des Energiestrahls ständig in dem/den zweiten Flächenbereichen 2FB angeordnet ist. Dies führt zu den oben beschriebenen Nachteilen, wie einer mangelhaften Materialstruktur sowie zu möglichen Kollisionen des Bauteils B mit einem Beschichter (vorliegend nicht explizit gekennzeichnet) .

In dem vergrößerten Abschnitt oben rechts in der Figur 3 ist weiterhin eine vordefinierte und/oder minimale Bestrahlungsvektorlänge L_{d} gekennzeichnet, welche beispielsweise im Wege des beschriebenen CAM-Verfahrens abgeschätzt, simuliert und/oder berechnet werden kann, und vorzugsweise derjenigen Bestrahlungsvektorlänge entspricht, gemäß derer das Bauteil B mindestens gerastert oder bestrahlt werden muss, damit die Energieeinträge in die Struktur des Bauteils B nicht zu groß werden. Die Bestrahlungsvektorlänge L_{d} kann beispielsweise zwischen 50 und 200 µm betragen.

Figur 4 zeigt nun wie das vorliegend beschriebene erfindungsgemäße Verfahren die lokalen Überhitzungen in den zweiten Flächenbereichen durch eine entsprechende Konfektionierung der Bestrahlungsvektoren V des Bestrahlungsmusters BM vermeidet. Die entsprechend gemäß Figur 3 andersartig schraffierten ersten Flächenbereiche 1FB des Bauteils B sind in Figur 4 nicht mehr im Überlapp mit der Bauteilkontur B, 10 gekennzeichnet. Stattdessen deutet die Figur 4 durch den runden Verlauf der die Streifenbegrenzungen oder -trennlinien an, dass die zweiten Flächenbereiche 2FB auf Kosten der ersten Flächenbereiche 1FB vergrößert wurden, dem die Bestrahlungsvektoren V des Bestrahlungsmusters BM auf eine Länge Lᵥ (vgl. Doppelpfeil) verlängert wurden. Dies verhindert die oben beschriebenen Nachteile und löst das Problem der vorliegenden Erfindung. Da die Bestrahlungsvektoren V der zweiten Flächenbereiche in Figur 2 nun sogar größer sind als der Streifenabstand 1, tritt das Problem der Übersetzungen während der (schichtweisen) additiven Herstellung des Bauteils nicht mehr auf.

Das Bauteil, welches auf Basis des wie oben in Figur 4 beschriebenen festgelegten Bestrahlungsmusters BM additiv aufgebaut wurde, beispielsweise durch ein selektives Laser-Schmelzverfahren (vergleiche Figur 6), umfasst nunmehr beispielsweise eine im Vergleich zu einem gemäß dem Stand der Technik hergestellten Bauteil verbesserte Materialstruktur, insbesondere eine verbesserte Härte, Festigkeit oder Heißrissanfälligkeit, und/oder ein homogeneres oder günstigeres Phasengefüge, beispielsweise hinsichtlich der γ oder γ' Ausscheidungen in Superlegierungen.

Vorzugsweise zeichnet sich das so hergestellte Bauteil weiterhin durch eine (im Gegensatz zum Stand der Technik) verbesserte Maßhaltigkeit oder Maßhaltigkeitstoleranz aus, vorzugsweise um eine um 50 bis 100 % verbesserte Maßhaltigkeit.

In Figur 5 ist anhand eines schematischen Flussdiagramms das erfindungsgemäße Verfahren dargestellt. Das genannte Verfahren ist vorzugsweise ein Verfahren zum selektiven Bestrahlen einer Materialschicht in der additiven Herstellung.

Es umfasst in Verfahrensschritt a) das Bereitstellen einer vorbestimmten Bauteilgeometrie B, welche Geometrieinformationen der einzelnen Schichten S (vgl. Figur 6) eines additiv herzustellenden Bauteils B enthält. Dies kann beispielsweise durch Einlesen einer CAD-Datei beispielsweise in eine entsprechende additive Herstellungsanlage oder eine entsprechende Datenverarbeitungseinrichtung oder einen Computer erfolgen.

Das Verfahren umfasst weiterhin, in Verfahrensschritt b), dass schichtweises Festlegen des Bestrahlungsmusters BM (wie oben beschrieben) in Flächenbereiche einer aufzubauenden Schicht S für die Herstellung des Bauteils B, wobei das Bestrahlungsmuster BM in jedem Flächenbereich Bestrahlungsvektoren V umfasst.

Verfahrensschritt aa) deutet an, dass Bestrahlungsvektoren der Länge Lₘ in dem oder den zweiten Flächenbereichen 2FB der Schicht S bis zu der Bauteilkontur 10 verlängert werden (vgl. Figur 4), wenn die (vor)definierte Bestrahlungsvektorlänge L_{d} eines gegebenen Vektors in dem ersten Flächenbereich 1FB unterschritten wird.

Das Verfahren umfasst weiterhin in Verfahrensschritt c) das Festlegen und Speichern des Bestrahlungsmusters BM für alle Schichten S des Bauteils B oder alle Schichten des Bauteils B, welche beispielsweise durch ihre gewünschte und definierte Geometrie zu Strukturfehlern oder Überhitzungen neigen.

Das Verfahren umfasst weiterhin in Verfahrensschritt d), das schichtweise Verknüpfen und/oder Bereitstellen der Informationen des Bestrahlungsmusters BM für das Bauteil B zusammen mit den Geometrieinformationen (CAD) einzelner Schichten des Bauteils in einem gemeinsamen Datensatz, beispielsweise in einem STL, AMF oder G-Code-Format.

Die Erfindung ist nicht durch die Beschreibung anhand der Ausführungsbeispiele auf diese beschränkt, sondern umfasst jedes neue Merkmal sowie jede Kombination von Merkmalen. Dies beinhaltet insbesondere jede Kombination von Merkmalen in den Patentansprüchen, auch wenn dieses Merkmal oder diese Kombination selbst nicht explizit in den Patentansprüchen oder Ausführungsbeispielen angegeben ist.

## Patentansprüche

1. Verfahren zum selektiven Bestrahlen einer Materialschicht (S) in der additiven Herstellung, umfassend die folgenden Schritte:
- a) Bereitstellen einer vorbestimmten Bauteilgeometrie (B), welche Geometrieinformationen einzelner Schichten (S) eines additiv herzustellenden Bauteils (B) enthält,
- b) schichtweises Festlegen eines Bestrahlungsmusters (BM) in Flächenbereichen (1FB, 2FB) einer aufzubauenden Schicht (S) für die Herstellung des Bauteils (B), wobei das Bestrahlungsmuster (BM) in jedem Flächenbereich (FB) Bestrahlungsvektoren (V) umfasst, und
- aa) - wenn eine vordefinierte Bestrahlungsvektorlänge (Lₘ) in einem ersten Flächenbereich (1FB) unterschritten wird - Verlängern von Bestrahlungsvektoren in einem zu dem ersten Flächenbereich (1FB) benachbarten zweiten Flächenbereich (2FB) der Schicht (S) bis zu einer Bauteilkontur (10).

2. Verfahren gemäß Anspruch 1, wobei die Bestrahlungsvektoren (V) in dem zweiten Flächenbereich (2FB) bis zu der Bauteilkontur (10) verlängert werden, um eine geschätzte oder berechnete lokale Überhitzung durch zu kurze Bestrahlungsvektoren (Lₘ) in dem ersten Flächenbereich (1FB) zu verhindern.

3. Verfahren gemäß Anspruch 1 oder 2, wobei das schichtweise Festlegen rechnerunterstützt mittels eines CAM-Verfahrens erfolgt.

4. Verfahren gemäß einem der vorhergehenden Ansprüche, wobei das Bestrahlungsmuster (BM) für alle Schichten (S) des additiv herzustellenden Bauteils (B) festgelegt und gespeichert wird (c)).

5. Verfahren gemäß einem der vorhergehenden Ansprüche, wobei die Informationen des Bestrahlungsmusters (BM) für das Bauteil (B) schichtweise mit den Geometrieinformationen einzelner Schichten (S) des Bauteils (B) in einem gemeinsamen Datensatz (d)) bereitgestellt werden.

6. Additives Herstellungsverfahren, umfassend das Verfahren gemäß einem der vorhergehenden Ansprüche, wobei das selektive Bestrahlen mittels eines Lasers oder eines Elektronenstrahls erfolgt, und die Materialschicht (S) eine Pulverschicht (P) ist.

7. Additives Herstellungsverfahren gemäß Anspruch 6, wobei die Pulverschicht eine, insbesondere gehärtete, nickel- oder kobaltbasierte Superlegierung, und das Bauteil eine im Heißgaspfad einer Strömungsmaschine anzuwendende Komponente ist.

8. Bauteil, welches gemäß dem Verfahren nach Anspruch 6 oder 7 hergestellt oder herstellbar ist, weiterhin umfassend
- im Vergleich zu einem gemäß dem Stand der Technik hergestellten Bauteil - eine um 50 bis 100 % verbesserte Maßhaltigkeit.

9. Computerprogrammprodukt umfassend Befehle, die bei der Ausführung des Programms durch einen Computer diesen veranlassen, das schichtweise Festlegen des Bestrahlungsmusters (b)) gemäß Anspruch 1 durchzuführen.
